# EUROPÄISCHE PATENTSCHRIFT

(11) **EP 1 375 041 B1**
(45) Veröffentlichungstag und Bekanntmachung des Hinweises auf die Patenterteilung: **29.06.2011**
(21) Anmeldenummer: 03012492.9
(22) Anmeldetag: 02.06.2003
(51) Int. Cl.: B23C 3/05, B23B 27/16

(54) **Werkzeug zur spanenden Bearbeitung von Ventilsitzen**
Tool to work engine valve seats
Outil à usiner des soupapes de moteurs

(30) Priorität: 21.06.2002 DE 10228503
(43) Veröffentlichungstag der Anmeldung: 02.01.2004
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- DE-U- 8 910 333
- GB-A- 1 369 096
- US-A- 4 535 216
- US-A- 4 722 642
- US-A- 4 966 500
- US-A- 5 685 769
- US-A- 5 704 741

## Beschreibung

Die Erfindung betrifft ein Werkzeug zur spanenden Bearbeitung von Ventilsitzen in Zylinderköpfen von Verbrennungsmotoren gemäß Oberbegriff des Anspruchs 1 sowie ein Verfahren zur spanenden Bearbeitung von Ventilsitzen in Zylinderköpfen von Verbrennungsmotoren gemäß Oberbegriff des Anspruchs 12.

Werkzeuge und Verfahren der hier angesprochenen Art sind bekannt. Die Werkzeuge weisen eine Messerplatte auf, die mindestens eine geometrisch definierte Schneidkante umfasst, mit deren Hilfe Späne vom Ventilsitz abgetragen werden können, sei es dadurch, dass das Werkzeug gegenüber einem feststehenden Werkstück in Rotation versetzt wird oder das Werkstück gegenüber einem feststehenden Werkzeug. In der Regel wird der erstere der beiden Fälle realisiert. Der Ventilsitz weist eine erste Ringfläche auf, die mit einer gedachten Mittelachse der Ringfläche einen ersten Neigungswinkel von beispielsweise zirka 45° einschließt. Diese erste Ringfläche bestimmt im Wesentlichen die Gasdichtheit des Ventils. An diese schließen sich einerseits eine zweite Ringfläche mit einem Neigungswinkel von zirka 15° und andererseits eine dritte Ringfläche mit einem Neigungswinkel von zirka 75° an. Bei der Ventilsitzbearbeitung wird das Werkzeug entlang der gemeinsamen Mittelachse der Ringflächen axial verlagert, bis die Messerplatte mit dem Ventilsitz in Eingriff tritt und beispielsweise die erste Ringfläche bearbeitet. Die Bearbeitung erfolgt damit durch eine Bewegung des Werkzeugs in Richtung der Ventilachse, die mit der Mittelachse der Ringfläche zusammenfällt. Die Bearbeitung wird als Ventilstechen bezeichnet. Vorzugsweise werden Werkzeuge eingesetzt, mit denen sowohl der Ventilsitz als auch die Ventilführung bearbeitet werden kann, die also eine Messerplatte zur Bearbeitung des Ventilsitzes und eine Reibahle zur Bearbeitung der Ventilführung aufweisen. Dadurch wird die Fluchtgenauigkeit der Mittelachse des Ventilsitzes mit der Mittelachse der Ventilführung sehr genau, was zu einer guten Abdichtung des Ventils beiträgt.

Der Ventilsitz in Zylinderköpfen von Verbrennungsmotoren wird in der Regel durch Ventilsitzringe realisiert, die aus sehr harten verschleißfesten Sintermaterialien bestehen, so dass die Bearbeitung sehr aufwendig ist und in der Regel kubisches Bornitrid (CBN) eingesetzt werden muss, das sehr teuer ist. Außerdem sind die Qualitätsanforderungen sehr hoch, um die sogenannte Gasdichtheit zu gewährleisten. Schon ein geringer Verschleiß der Schneidkante führt zu einer Überschreitung der zulässigen Toleranzen. Insgesamt zeigt sich, dass die Kosten für die Bearbeitung des Ventilsitzes sehr hoch sind.

Aus der DE 89 10 333 U1 geht ein Werkzeug zur spanabhebenden Bearbeitung von insbesondere Ventilsitzen von Verbrennungsmotoren hervor, welches einen kreisförmig ausgebildeten Schneideinsatz mit mehreren Schneidkanten umfasst, der mit einer Spannschraube an dem Werkzeug befestigt ist. Zur Aufnahme des Schneideinsatzes ist eine zylindrische oder konische Bohrung vorgesehen. Eine Einstellung des Schneideinsatzes in eine gewünschte Arbeitsstellung erfolgt durch Lösen der Spannschraube und Drehen des Schneideinsatzes. Es hat sich gezeigt, dass gerade die Verdrehbarkeit des kreisförmigen Schneideinsatzes eine gewisse Anfälligkeit für Vibrationen bedingt.

Aus der US 4 966 500 geht ein Stirnfräser mit einer eine aktive Schneidkante aufweisenden Messerplatte hervor. Die aktive Schneidkante wird von zwei, einen stumpfen Winkel zueinander einschließenden Kanten gebildet. Der Stirnfräser weist einen Grundkörper mit zwei unter einem Winkel angeordneten Abstützbereichen auf, an denen die Messerplatte anliegt. Die Winkelhalbierende dieser Abstützbereiche verläuft im Wesentlichen senkrecht zu der die Späne von einem Werkstück abtragenden aktiven Schneidkante. Bei der Bearbeitung eines Werkstücks wird der Stirnfräser zunächst um seine Rotationsachse in Drehung versetzt und taucht ein gewisses Stück in Richtung der Rotationsachse in das Werkstück ein. Dann wird der Stirnfräser entlang einer Bahn bewegt, die auf der Rotationsachse senkrecht steht. Dabei werden in die Kanten der aktiven Schneidkante Schnittkräfte eingeleitet, die zum einen senkrecht auf der einen Kante und zum anderen senkrecht auf der anderen Kante stehen. Der resultierende Vektor der Schnittkräfte steht daher auf keiner dieser Kanten senkrecht, so dass die Messerplatte aufgrund der Schnittkräfte stets fester gegen einen der beiden Abstützbereiche angepresst wird als gegen den anderen. Aus diesem Grund können insbesondere im Bereich des Abstützbereichs, an dem die Messerplatte nicht so fest angepresst ist, Vibrationen auftreten, die einen raschen Verschleiß der Messerplatte zur Folge haben, insbesondere wenn harte Materialien bearbeitet werden.

Aufgabe der Erfindung ist es, ein Werkzeug der hier angesprochenen Art zu schaffen, bei dem während der Bearbeitung eines Ventilsitzes Vibrationen der Messerplatte wirksam vermieden werden, so dass sich die Standzeit der Schneidkante einer Messerplatte bei gleichzeitiger Einhaltung der Toleranzen deutlich erhöht.

Zur Lösung dieser Aufgabe wird ein Werkzeug vorgeschlagen, das die in Anspruch 1 genannten Merkmale aufweist. Dieses umfasst eine mindestens eine geometrisch definierte Schneidkante aufweisende Messerplatte. Diese liegt an zwei unter einem Winkel α angeordneten Abstützbereichen an, deren Winkelhalbierende im Wesentlichen senkrecht zu der Schneidkante verläuft, die Späne vom Ventilsitz abträgt. Das Werkzeug zeichnet sich dadurch aus, dass Abstützbereiche so angeordnet sind, dass eine Prismenführung der Messerplatte verwirklicht wird, wobei die Schnittkräfte im Wesentlichen parallel zu der Winkelhalbierenden in die Messerplatte eingeleitet werden. Durch die Anordnung der Abstützflächen zur Realisierung einer Prismenführung der Messerplatte wird erreicht, dass diese sehr stabil im Grundkörper des Werkzeugs aufgenommen wird. Das heißt, die Messerplatte wird so am Werkzeug verankert, dass bei der Bearbeitung eines Ventilsitzes praktisch keine Vibrationen der Messerplatte auftreten. Es hat sich herausgestellt, dass bei Vibrationen der Verschleiß der Schneidkante relativ stark erhöht wird und dass umgekehrt bei einer vibrationsarmen Verankerung der Messerplatte der Verschleiß der aktiven Schneidkante, also der Schneidkante, die Späne vom Ventilsitz abträgt, deutlich reduziert werden kann.

Vorteilhafte Ausführungsbeispiele des Werkzeugs ergeben sich aus den Unteransprüchen.

Aufgabe der Erfindung ist es auch, ein Verfahren zu schaffen, das die genannten Nachteile nicht aufweist.

Zur Lösung dieser Aufgabe wird auch ein Verfahren vorgeschlagen, das die in Anspruch 12 genannten Merkmale aufweist. Es zeichnet sich dadurch aus, dass das Werkzeug bei der Bearbeitung des Ventilsitzes in Richtung einer Mittelachse des ringförmigen Ventilsitzes verlagert wird, und dass als aktive Schneidkante ein zwischen zwei Ecken angeordneter Bereich einer Messerplatte Späne vom Ventilsitz abträgt, wobei die zwei unter einem Winkel α angeordneten, durch den Grundkörper des Werkzeugs gebildeten Abstützbereiche so angeordnet sind, dass eine Prismenführung der Messerplatte verwirklicht wird, und wobei die Schnittkräfte im Wesentlichen parallel zu der Winkelhalbierenden in die Messerplatte eingeleitet werden, so dass aufgrund der durch die Abstützbereiche verwirklichten Ausrichtung der Messerplatte des Werkzeugs eine Nach- und/oder Einstellung derselben bei einem Verschleiß einer Schneidkante entbehrlich ist. Dies führt zu einer wesentlichen Vereinfachung des Verfahrens und damit auch zu preiswerteren Lösungen.

Eine weitere Ausführungsform ergibt sich aus dem Unteranspruch.

Die Erfindung wird im Folgenden anhand der Zeichnung näher erläutert. Es zeigen:
- Figur 1: eine Seitenansicht eines Werkzeugs;
- Figur 2: eine vergrößerte Darstellung der Messerplatte in Drauf- sicht, die bei dem Werkzeug gemäß Figur 1 verwendet wird;
- Figur 3: eine Draufsicht auf die Messerplatte bei entfernter Spannpratze;
- Figur 4: eine Draufsicht auf einen Teilbereich eines Werkzeugs ohne die Messerplatte;
- Figur 5: einen Querschnitt durch das Werkzeug entlang der in Fi- gur 3 angegebenen Linie V-V;
- Figur 6: ein Detail eines Werkzeugs mit einer Kühl-/Schmier- mittelzufuhr;
- Figur 7: einen Schnitt gemäß Figur 5 durch ein abgewandeltes Werkzeug und
- Figur 8: eine Prinzipskizze eines Ventilsitzes mit einem Ventil.

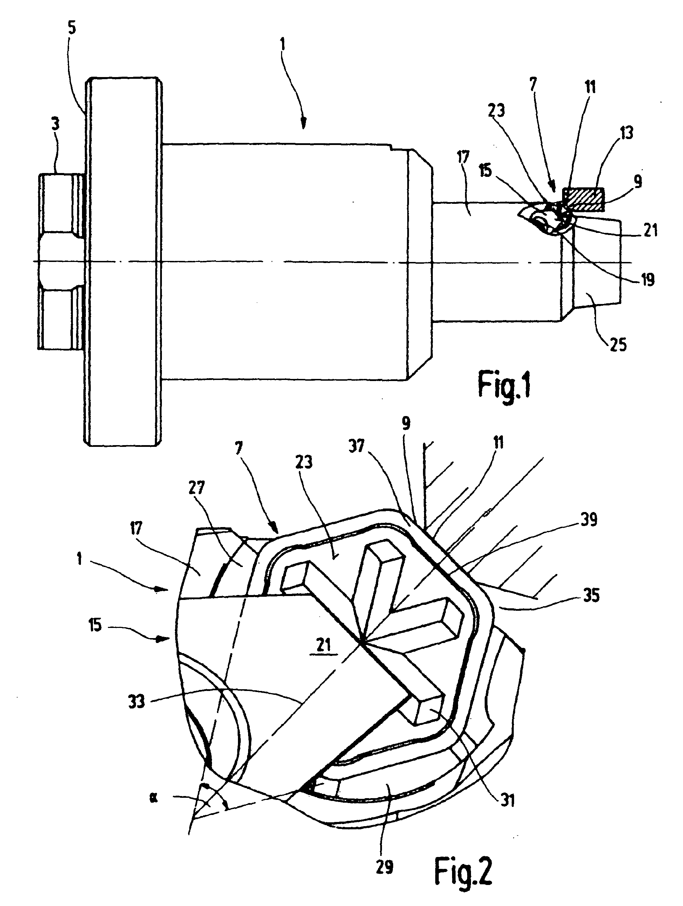

Die Darstellung gemäß Figur 1 zeigt ein Ventilsitzbearbeitungswerkzeug, also ein Werkzeug 1, das der Bearbeitung von Ventilsitzen in Zylinderköpfen von Verbrennungsmotoren dient. Auf der linken Seite des Werkzeugs ist ein Befestigungsschaft 3 ersichtlich, der von einer ringförmigen Planfläche 5 umgeben ist. Der Befestigungsschaft 3 dient der Kopplung des Werkzeugs 1 mit einer Werkzeugmaschine, wobei durch die Planfläche 5 eine exakte Ausrichtung des Werkzeugs 1 gewährleistet ist. Die Kopplung des Werkzeugs 1 mit einer Werkzeugmaschine kann auch auf andere Weise geschehen.

Auf der dem Befestigungsschaft 3 gegenüberliegenden Seite des Werkzeugs 1 ist eine Messerplatte 7 zu sehen, die eine geometrisch definierte Schneidkante 9 aufweist. Mit dieser werden Späne von einem Ventilsitz 11 abgetragen, der Teil eines in einen hier nicht dargestellten Zylinderkopf eines Verbrennungsmotors eingesetzten Ventilsitzrings 13 ist.

Die Messerplatte 7 wird mittels einer Spannpratze 15 am Grundkörper 17 des Werkzeugs 1 befestigt. Die Spannpratze 15 wird mit einer Spannschraube 19 so festgespannt, dass eine Spannlippe 21 auf der auch als Messerbrust bezeichneten Vorderseite 23 der Messerplatte 7 zu liegen kommt.

An dem dem Befestigungsschaft 3 gegenüberliegenden Ende 25 des Werkzeugs 1 kann eine Trennstelle vorgesehen sein, an der ein Werkzeug zur Bearbeitung der Ventilführung, insbesondere eine Reibahle, anbringbar ist.

In Figur 2 ist der Bereich vergrößert dargestellt, in dem die Messerplatte 7 am Grundkörper 17 des Werkzeugs 1 angebracht ist.

Gleiche Teile sind mit gleichen Bezugsziffern versehen, so dass auf die Beschreibung zu Figur 1 verwiesen werden kann. Aus der vergrößerten Darstellung gemäß Figur 2, die die Messerplatte 7 in Draufsicht zeigt, sind ein erster Abstützbereich 27 und ein zweiter Abstützbereich 29 ersichtlich, an denen die Messerplatte 7 nicht nur anliegt. Sie wird vielmehr durch die Spannpratze 15 gegen die Abstützbereiche 27 und 29 angepresst.

Um die Haltekräfte der Spannlippe 21 der Spannpratze 15 zu verbessern, sind in die Vorderseite 23 der Messerplatte 7 Spannkerben 31 eingebracht, die ―im Querschnitt gesehen- V-förmig ausgebildet sind, damit die Spannlippe 21 die Messerplatte 7 nicht nur gegen die Abstützbereiche 27 und 29, sondern auch gegen eine hier nicht sichtbare Auflagefläche anpresst.

Die Abstützbereiche 27 und 29 sind in einem Winkel α angeordnet und zwar der Gestalt, dass die Winkelhalbierende 33 im Wesentlichen senkrecht steht auf der aktiven Schneidkante 9, mit der Späne von dem Ventilsitz 11 abgetragen werden.

Bei dem hier dargestellten Ausführungsbeispiel ist die Messerplatte 7 als Wendeplatte ausgebildet. Sie kann um eine gedachte, senkrecht auf der Vorderseite 23 der Messerplatte 7 stehende Achse gedreht werden, so dass bei einem Verschleiß der aktiven Schneidkante 9 eine weitere Schneidkante 9 der Messerplatte 7 für die Bearbeitung des Ventilsitzes 11 zur Verfügung steht. Die Messerplatte 7 ist hier als Sechseck ausgebildet. Sie weist also sechs Schneidkanten 9 auf, die jeweils durch eine abgerundete Ecke 35 von einer angrenzenden Schneidkante 9 getrennt ist. Die Schneidkante 9 wird jeweils durch den zwischen zwei benachbarten Ecken 35 liegenden Außenkantenbereich der Messerplatte 7 gebildet.

Die Messerplatte 7 des Werkzeugs 1 muss sehr genau geschliffen sein und absolut gerade Schneidkanten 9 aufweisen.

Bei dem hier dargestellten Ausführungsbeispiel ist es also möglich, die Messerplatte 7 sechsmal zu verdrehen und damit sechs Schneidkanten 9 für die Bearbeitung eines Ventilsitzes zur Verfügung zu stellen. Entsprechend sind drei Spannkerben 11 vorgesehen, die sternförmig auf der Vorderseite 23 der Messerplatte 7 angeordnet sind. An die Schneidkanten schließt sich jeweils eine Spanleitfläche 37 an, die von in einem Abstand zur Schneidkante angeordneten Spanleitstufen 39 begrenzt wird, gegen die die von der Schneidkante 9 abgetragenen Späne anlaufen und gebrochen werden. Die Ausgestaltung einer Messerplatte 7, wie sie hier dargestellt ist, ist grundsätzlich bekannt. Abweichend ist hier jedoch, dass bei der spanenden Bearbeitung eines Werkstücks eben gerade nicht die Ecken 35 als Schneidkanten eingesetzt werden, sondern die zwischen diesen angeordneten Bereiche. Entsprechend ist in Figur 2 auch dargestellt, dass die Schneidkante 9 mit einem zwischen den Ecken 35 liegenden Bereich den Ventilsitz 11 bearbeitet. Dabei ist die aktive Schneidkante 9 nicht so lang, wie die zwischen den Ecken 35 liegende Außenkante der Messerplatte 7.

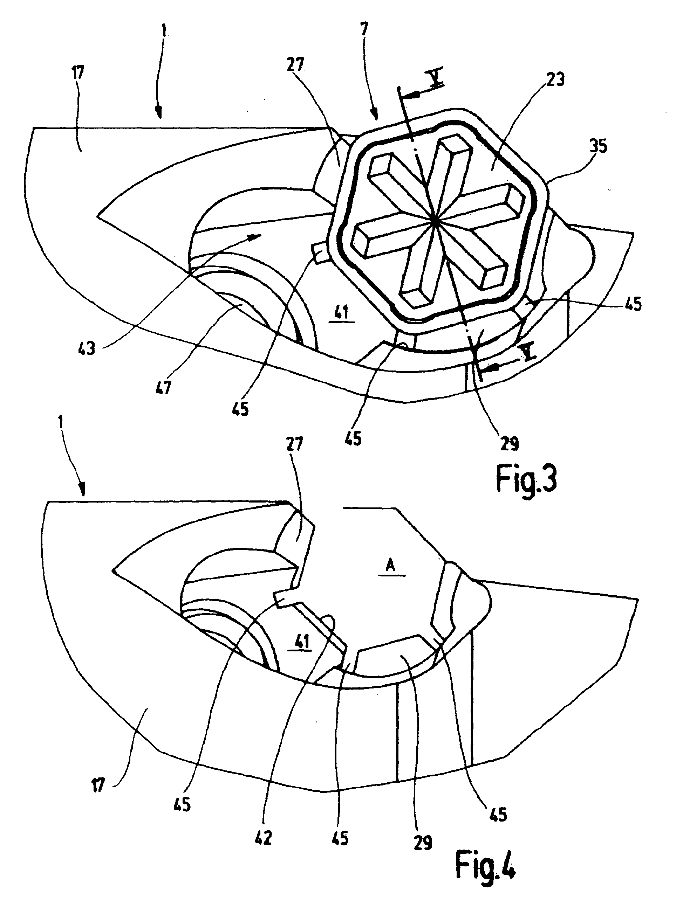

Figur 3 zeigt die Messerplatte 7 in Einbauposition, wie sie auch in den Figuren 1 und 2 dargestellt ist, jedoch mit entfernter Spannpratze. Gleiche Teile sind mit gleichen Bezugsziffern versehen, so dass insofern auf die vorangegangene Beschreibung verwiesen wird.

Aus Figur 3 ist ersichtlich, dass die Messerplatte 7 so in den Grundkörper 17 des Werkzeugs 1 eingesetzt ist, dass sie zumindest mit zwei Seiten an Abstützbereichen 27 und 29 anliegt. Es wird auch deutlich, dass im Bereich der Grundfläche 41 einer die Messerplatte 7 und die Spannpratze 15 aufnehmenden Ausnehmung 43 Freistellungen 45 vorgesehen sind, die im Bereich der Ecken 35 der Messerplatte 7 angeordnet sind. Auf diese Weise wird sichergestellt, dass die der Vorderseite 23 der Messerplatte 7 gegenüberliegende Rückseite plan auf der Grundfläche 41 aufliegt. Aus der Darstellung gemäß Figur 3 wird deutlich, dass in dem Grundkörper 17 eine die Grundfläche 41 durchstoßende Bohrung 47 vorgesehen ist, in die die hier nicht dargestellte Spannschraube 19 eingreift, mit der Spannpratze 15 am Grundkörper 17 verankert wird.

Zur Verdeutlichung zeigt Figur 4 den in Figur 3 dargestellten Ausschnitt des Werkzeugs 1 ohne die Messerplatte 7, so dass die Anlageflächen 27 und 29 sowie die Grundfläche 41 deutlich erkennbar werden.

Aus Figur 4 ist ersichtlich, dass die Grundfläche 41 noch eine Stufe 42 aufweisen kann, dass also der Bereich, in dem die Spannpratze 15 zu liegen kommt, etwas höher ist als der unmittelbare Auflagebereich A für die Messerplatte 7.

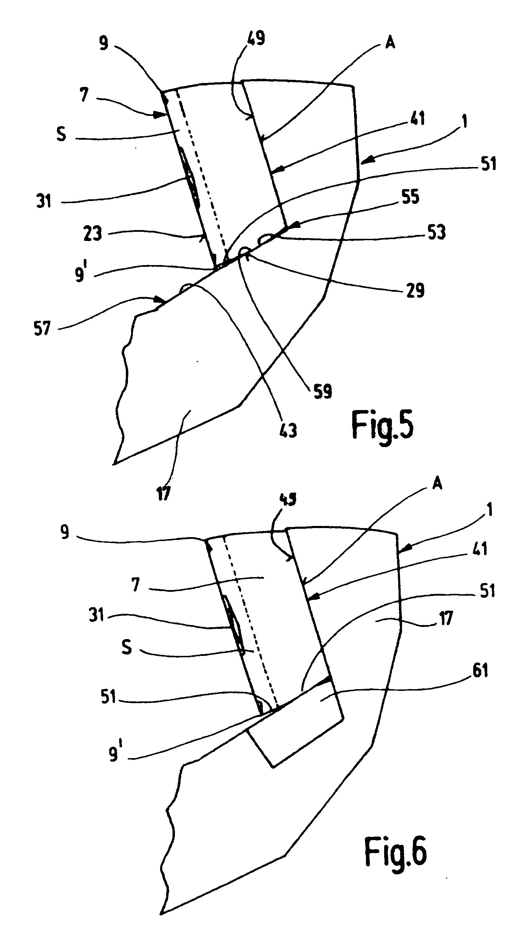

Figur 5 zeigt einen Querschnitt entlang der in Figur 3 eingezeichneten Linie V-V. Deutlich erkennbar ist die Messerplatte 7, die auf der Grundfläche 41, nämlich im Auflagebereich A der Ausnehmung 43 im Grundkörper 17 des Werkzeugs 1 angeordnet ist. Erkennbar sind auch die in die Vorderseite 23 der Messerplatte 7 eingebrachten Spannkerben 31, in die die hier nicht dargestellte Spannlippe 21 der Spannpratze 15 eingreift.

Die Schnittdarstellung zeigt auch den zweiten Abstützbereich 29, an dem die Messerplatte 7 anliegt. Diese ist quasi trapezförmig ausgebildet: Die Grundfläche des Trapezes wird durch die Vorderseite 23 der Messerplatte 7 gebildet, die Oberseite durch die der Vorderseite 23 gegenüberliegende Rückseite 49 der Messerplatte 7. Die Rückseite 49 liegt auf der Grundfläche 41 auf. Die Seitenflächen der Messerplatte 7 werden durch die Freiflächen der Messerplatte 7 gebildet.

In Figur 5 ist oben eine Schneide 9 und gegenüberliegend eine Schneide 9' dargestellt. An diese schließt sich ein erster Freiflächenbereich 51 an, der gegenüber der Vorderseite 23 einen bestimmten Neigungswinkel < 90° aufweist. Der erste Freiflächenbereich 51 geht über in einen zweiten Freiflächenbereich 53, der exakt parallel verläuft zu den Abstützbereichen, hier also zum zweiten Abstützbereich 29.

Der Neigungswinkel des ersten Freiflächenbereichs 51 kann größer sein als der des zweiten Freiflächenbereichs 53, so dass der erste Freiflächenbereich 51 nicht an dem Abstützbereich 29 anliegt und die am Abstützbereich anliegenden Schneidkanten, hier die Schneidkante 9', nicht beschädigt werden können.

Um eine definierte Anlage der Messerplatte 7 am Abstützbereich 29 zu gewährleisten, ist nahe der Grundfläche 41 eine sogenannte Freistellung 55 vor-gesehen, also ein Spalt zwischen der Seitenfläche 57 der Ausnehmung 43 und der Seitenfläche 59 der Messerplatte 7. Die Freistellung kann dadurch realisiert werden, dass die Seitenfläche 57 der Ausnehmung 43 in Richtung auf die Grundfläche 41 von der Messerplatte 7 weg verläuft oder dadurch, dass die Messerplatte 7 im Bereich der Freistellung 55 etwas abgetragen ist.

Entscheidend ist, dass die Seitenfläche 59 der Messerplatte 7 im Abstützbereich 29 am Grundkörper 17 des Werkzeugs 1 anliegt.

Hier bei dem in Figur 5 dargestellten Ausführungsbeispiel wird der zweite Abstützbereich 29 unmittelbar vom Grundkörper 17 des Werkzeugs 1 gebildet.

Figur 6 zeigt ein abgewandeltes Ausführungsbeispiel eines Werkzeugs 1 und zwar wiederum im Schnitt entlang der in Figur 3 dargestellten Linie V-V. Gleiche Teile sind mit gleichen Bezugsziffern versehen, so dass auf die Beschreibung zu den vorangegangenen Figuren verwiesen wird. Der einzige Unterschied gegenüber dem in Figur 5 dargestellten Werkzeug 1 besteht darin, dass in den Grundkörper 17 Einsätze 61 eingebracht werden, die die Abstützbereiche 27 und 29 bilden, zumindest hier vorgesehen sind. Dabei ist es möglich, mehr oder weniger rechteckig ausgebildete Einsätze vorzusehen, oder aber auch einen Stift in den Grundkörper 17 einzusetzen, der jeweils in dem Bereich der Abstützbereiche vorgesehen ist und der Abstützung der Messerplatte 7 dient.

Das Material der Einsätze ist vorzugsweise härter als das des Grundkörpers 17. Besonders bevorzugt werden Einsätze 61 aus Hartmetall und/oder Keramik und/oder CBN.

In den Figuren 5 und 6 ist durch eine gestrichelte Linie angedeutet, dass die Messerplatte 7 mit einer Schicht S aus kubischem Bornitrid (CBN) versehen ist, deren Dicke vorzugsweise so gewählt ist, dass diese Schicht mit den Abstützbereichen 27 und 29 nicht in Berührung tritt. Der Grundkörper der Messerplatte 7 besteht vorzugsweise aus Hartmetall.

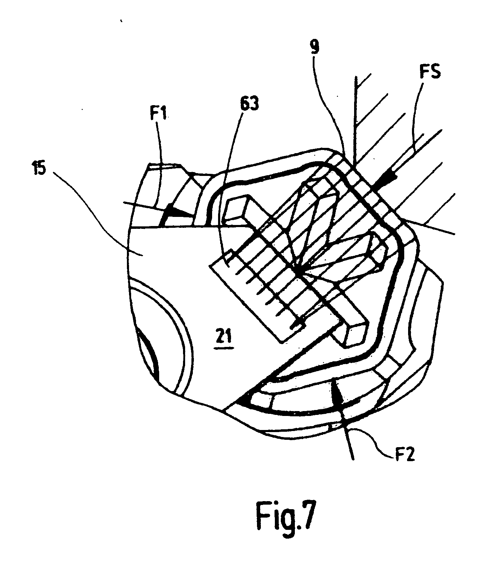

Figur 7 zeigt noch einmal die von einer Spannpratze 15 festgehaltene Messerplatte 7 mit einer abgewandelten Ausführungsform der Spannpratze 21.

Werkzeuge der hier angesprochenen Art sind in der Regel mit einer Kühl-/Schmiermittelversorgung ausgestattet, mit deren Hilfe die aktive Schneide 9, das heißt also die Schneide, die gerade Späne von einem Ventilsitz 11 abträgt, mit dem Kühl-/Schmiermittel beaufschlagt wird, um eine zu hohe Temperatur der Schneide zu vermeiden, insbesondere um eine möglichst gleichmäßige Temperatur der Schneidkante zu gewährleisten.

Bei dem in Figur 7 dargestellten Ausführungsbeispiel weist die Spannpratze 15, genauer deren Spannlippe 21 einen Kühlmittelauslass 63 auf, aus dem das Kühlmittel in Richtung auf die aktive Schneide 9 austritt. Der Kühlmittelauslass 63 ist hier langgestreckt, insbesondere rechteckförmig, und verläuft vorzugsweise parallel zur aktiven Schneide 9. Die Länge des Kühlmittelauslasses 63 ist so gewählt, dass die aktive Schneide 9 auf gesamter Breite mit dem Kühl-/Schmiermittel beaufschlagt wird.

In Figur 7 sind die bei der Bearbeitung eines Ventilsitzes auftretenden Kräfte näher bezeichnet. Dabei wird die Schnittkraft FS mit einem ersten Pfeil gekennzeichnet und die beiden von den Abstützbereichen 27 und 29 aufgebrachten Stützkräfte mit Pfeilen, die mit F1 und F2 gekennzeichnet sind.

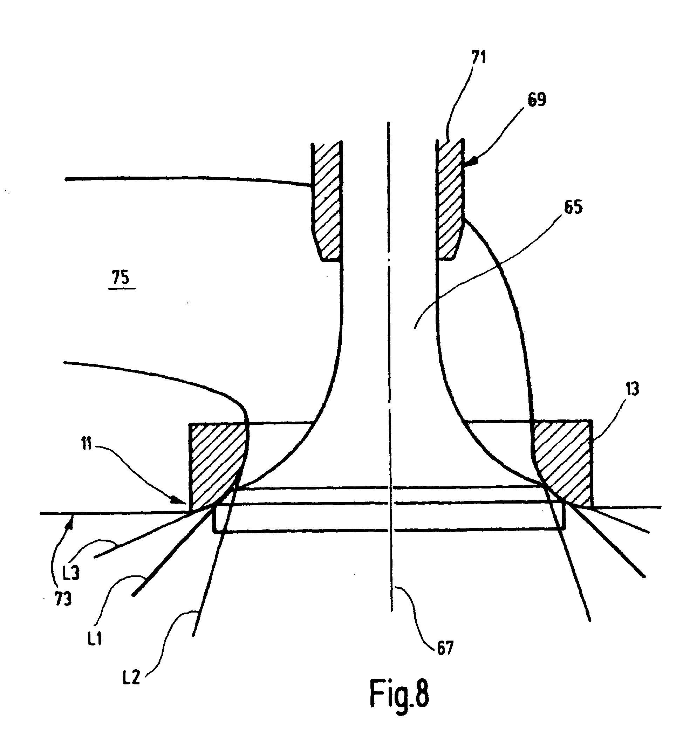

Figur 8 zeigt eine Prinzipskizze eines Ventilsitzes 11 mit einem Ventil 65. Der Ventilsitz ist im Bereich eines Ventilsitzrings 13 realisiert. Er weist auf seiner Innenseite drei Ringbereiche auf, die konzentrisch zu einer gedachten Mittelachse 67 verlaufen, die auch die Mittelachse einer Ventilführung 69 darstellt. Die Ventilführung kann einen zylindrischen Einsatz 71 umfassen, der aus einem gehärtetem, verschleißfesten Material besteht und, wie der Ventilsitzring, in den Zylinderkopf einer Brennkraftmaschine eingesetzt sind. Das Ventil verschließt im Bereich des Ventilsitzes einen Ein- oder Auslass 75 der Brennkraftmaschine, die den Zylinderkopf 73 umfasst.

Durch drei rechts und links von der Mittelachse 67 angedeutete Linien werden drei Ringbereiche des Ventilsitzes angedeutet. Ein erster Ringbereich schließt mit der Mittelachse 67 einen Winkel von beispielsweise zirka 45° ein, was durch eine erste Linie L1 angedeutet wird. Oberhalb des ersten Ringbereichs befindet sich ein zweiter Ringbereich, der eine Wandung aufweist, die sich von unten nach oben konisch verjüngt und mit der Mittelachse 67 einen Winkel von zirka 75° einschließt, was durch eine Linie L2 angedeutet ist. Unterhalb des ersten Ringbereichs befindet sich ein dritter Ringbereich, der sich von unten nach oben konisch verjüngt und dessen Wandung mit der Mittelachse 67 einen Winkel von 15° einschließt. Dieser durch diesen Winkel gekennzeichnete dritte Ringbereich wird durch die Linie L3 angedeutet.

Bei den hier beschriebenen Ventilsitzen kommt es besonders darauf an, dass die Gasdichtheit des Verbrennungsraums, der unterhalb des Ventils 65 liegt, gewährleistet ist. Dadurch werden Verbrauch und Leistung des Verbrennungsmotors besonders stark beeinflusst.

Wie in Figur 8 angedeutet, wird der Ventilsitz 11 vorzugsweise durch einen Ventilsitzring 13 gebildet, der in den Zylinderkopf 73 eingepresst oder eingeschrumpft wird und aus sehr hartem, verschleißfestem Material besteht.

Der Ventilsitzring, der in Figur 8 geschnitten dargestellt ist, weist hier drei umlaufende Ringflächen mit unterschiedlichen Winkeln bezüglich der Mittelachse 67. Die erste Ringfläche, die unter einem Winkel von 45° zur Mittelachse 67 verläuft, ist im Wesentlichen für die Gasdichtheit bestimmt, wobei hierbei natürlich die entsprechende Kontur des Ventils im unteren mit dem Ventilsitz zusammenwirkenden Bereich, also die Kontur des Ventiltellers, ebenfalls wichtig ist.

Die Qualitätsanforderungen an die Dichtfläche des Ventilsitzes 11, hier also im Wesentlichen an die erste Ringfläche, sind sehr hoch bezüglich Oberflächengüte und Ebenheit. Außerdem muss der durch die Linie L1 angedeutete Winkel bezüglich der Mittelachse 67 in sehr engen Toleranzen gefertigt werden. Daraus ist zu schließen, dass die Schneide 9 der Messerplatte 7 sehr genau geschliffen sein und absolut gerade Schneidkanten aufweisen muss. Außerdem muss die Messerplatte in einem sehr exakten und stabilen Plattensitz aufgenommen sein, um die exakte Ausrichtung der Messerplatte und damit der aktiven Schneide gegenüber dem Ventilsitz zu gewährleisten. Von entscheidender Bedeutung ist dies besonders dann, wenn sehr harte Materialien bearbeitet werden müssen und dabei beispielsweise polykristallines kubisches Bornitrid als Material für die Schneide verwendet wird. Besonders bei diesem spröden Material dürfen keinerlei Vibrationen auftreten, da sonst die Standzeiten der Schneiden schlecht sind.

Bei der Bearbeitung des Ventilsitzes, also beim Ventilsitzstechen, wird das in Figur 8 nicht dargestellte Werkzeug entlang der Mittelachse 67 bewegt, bis die Messerplatte in Eingriff mit dem Ventilsitz 11 und dem Ventilsitzring 13 tritt. Um die Ringbereiche mit unterschiedlichen Neigungswinkeln herzustellen, werden Werkzeuge mit unter verschiedenen Winkeln geneigten Schneiden verwendet. Selbstverständlich ist bei der Ventilsitzbearbeitung das Ventil 65 ausgebaut, damit das Werkzeug in das Innere des Ventilsitzrings 13 eingeführt werden kann.

Bei einem Werkzeug nach Figur 1 kann, wie gesagt, in das Ende 25 eine Reibahle eingesetzt werden, die die Innenfläche der Ventilführung 69 bearbeitet und dass Werkzeug führt. Wenn dieses zur Bearbeitung der Ventilführung 69 entlang der Mittelachse 67 verlagert wird, gelangt schließlich die Messerplatte 7 mit dem Ventilsitz 11 in Eingriff, so dass hier eine der Ringflächen bearbeitet wird. Wenn der Ventilsitz und die Ventilführung mit einem Werkzeug bearbeitet werden, lässt sich eine sehr große Fluchtgenauigkeit der Mittelachse des Ventilsitzrings und der Mittelachse der Ventilführung erreichen, was zu einer sehr guten Abdichtung des Ventils beiträgt.

Zur Funktion des Werkzeugs ist Folgendes festzuhalten:

Das Werkzeug 1 wird zur Bearbeitung von Ventilsitzen 11, die in der Regel Teil eines Ventilsitzrings 13 sind, in Rotation versetzt und in die Öffnung des Ventilsitzes eingeführt, also axial in Richtung der Mittelachse des ringförmigen Ventilsitzes verlagert, bis die Messerplatte 7 vom Ventilsitz 11 Späne abträgt. Der Bearbeitungsvorgang wird auch als Ventilsitz-Stechen bezeichnet. Die zu bearbeitenden Ventilsitze beziehungsweise Ventilsitzringe bestehen aus sehr harten Sintermaterialien, so dass entsprechend harte Messerplatten 7 eingesetzt werden müssen, vorzugsweise solche Messerplatten, die eine Schicht S aus kubischem Bohrnitrid (CBN) umfassen. Dieses Material hat die Eigenschaft, dass es sehr empfindlich ist gegen Vibrationen. Treten bei der Bearbeitung eines Ventilsitzes 11 Vibrationen auf, führt dies zu einem sehr starken Verschleiß, was zu Unterbrechungen des Bearbeitungsvorganges führt, weil die Messerplatte ausgetauscht werden, oder, wie bei den hier beschriebenen Werkzeugen, zumindest gedreht werden muss, um eine neue Schneide der als Wendeplatte ausgebildeten Messerplatte mit dem Ventilsitz in Eingriff zu bringen.

Bei hier beschriebenen Werkzeugen 1 kann die Messerplatte 7 sehr sicher im Grundkörper 17 des Werkzeugs 1 verankert werden, weil sie sich an zwei Stützbereichen 27 und 29 abstützt, die in einem Winkel α zueinander angeordnet sind, und zwar der Gestalt, dass die Winkelhalbierende 33 praktisch senkrecht auf dem zu bearbeitenden Ventilsitz 11 beziehungsweise der aktiven Schneide 9 steht.

Die Messerplatte 7 wird einerseits durch die Spannpratze 15 an die Abstützbereiche 27 und 29 herangedrückt, andererseits durch die in Figur 7 dargestellten Schnittkräfte FS. Die unter einem Winkel α angeordneten Abstützbereiche 27 und 29 liefern die Stützkräfte F1 und F2, so dass quasi eine Prismenführung der Messerplatte 7 erreicht wird.

Die Anpresskräfte der Messerplatte 7 an die Abstützbereiche 27 und 29 dürfen insbesondere dann sehr hoch sein, wenn in den Abstützbereichen Einsätze 61 vorgesehen sind, die aus einem Material bestehen, das härter ist als das des Grundkörpers 17 des Werkzeugs 1. Vorzugsweise werden Einsätze 61 aus Hartmetall und/oder Keramik und/oder CBN verwendet, so dass sehr hohe Anpresskräfte realisierbar sind, ohne dass es zu irgendwelchen Verformungen in den Abstützbereichen 27 und 29 käme und damit zu einer fehlerhaften Ausrichtung der Messerplatte 7. Durch die Prismenführung wird diese also sehr exakt unter einem vorbestimmbaren Winkel im Grundkörper 17 des Werkzeugs 1 gehalten und festgespannt.

Es wird deutlich, dass bei dem hier dargestellten Werkzeug 1, also wegen der als Wendeplatte ausgebildeten Messerplatte 7 und wegen der exakten Positionierung der Messerplatte 7 mittels der Abstützflächen 27 und 29, keinerlei Nach- oder Einstellvorrichtungen erforderlich sind, die das Werkzeug 1 schwächen können. Durch den gewonnenen Raum können auch größere Spannschrauben im Zusammenhang mit der Spannpratze 15 verwendet werden, so dass auch die Einspannkräfte erhöht werden können.

Da bei einem Verschleiß der aktiven Schneide 9 die Messerplatte 7 lediglich gedreht zu werden braucht, ist es für das Werkzeug 1 keineswegs von Nachteil, dass eine Einstellvorrichtung für die Nachstellung der Messerplatte 7 bei einem Verschleiß entfällt. Die Prismenführung der Messerplatte ist, wie besonders Figur 7 deutlich zeigt, so ausgebildet, dass die Messerplatte durch die Schnittkräfte FS im Grundkörper 17 des Werkzeugs 1 stabilisiert wird, nämlich gegen die Abstützbereiche 27 und 29 angepresst wird.

Falls die Abstützbereiche 27 und 29 mit Einsätzen 61 versehen sind, können diese im Wesentlichen rechteckförmig ausgebildet sein, was ohne weiteres aus Figur 6 ersichtlich ist. Es kann aber auch jeweils ein Stift in den Grundkörper 17 des Werkzeugs 1 eingesetzt werden, an dem die Messerplatte 7 abgestützt wird. Eine flächige Ausbildung wird jedoch vorgezogen, weil dann höhere Anpresskräfte problemlos abgefangen werden können.

Aus den Figuren 5 und 6 wird deutlich, dass eine Schicht der Messerplatte 7 aus CBN besteht und vorzugsweise so gewählt wird, dass diese sich lediglich über einen ersten Freiflächenbereich 51 erstreckt. Dadurch wird vermieden, dass das sehr spröde Material mit seitlichen Kräften beaufschlagt wird, was möglicherweise zu einer Beschädigung führen könnte. Da der Grundkörper der Messerplatte 7 vorzugsweise aus Hartmetall besteht, können in den Abstützbereichen 27 und 29 sehr hohe Abstützkräfte aufgebaut werden, ohne dass dies zu irgendeiner nachteiligen Verformung der Messerplatte 7 führen würde.

Aus den Erläuterungen zu den Figuren wird deutlich, dass an kritischen Bereichen Freistellungen vorgesehen sind, um punktförmige beziehungsweise linienförmige Belastungen zu vermeiden. So sind einerseits in den Bereichen der Ecken 35 der Messerplatte 7 Freistellungen 45 vorgesehen, andererseits im Übergangsbereich zwischen der Seitenfläche 59 der Messerplatte 7 und deren Rückseite 49. Diese zuletzt genannte Freistellung 55 kann, wie oben erläutert, auf verschiedene Weise realisiert werden, nämlich durch einen Rücksprung der Seitenfläche 59 der Messerplatte 7 oder der Seitenfläche 57 der Ausnehmung 43, in der die Messerplatte 7 untergebracht ist.

Schließlich zeigt sich noch, dass insbesondere bei Messerplatten mit einer Schicht S aus CBN eine gezielte Kühl-/Schmiermittelzufuhr vorteilhaft ist. Der Schneidstoff CBN ist thermoschockempfindlich und empfindlich gegenüber unterschiedlichen Temperaturen der Schneidkante 9. Aufgrund der speziellen Kühl-/Schmiermittelzufuhr durch die Spannpratze 15 hindurch kann eine sehr effektive Kühlung der aktiven Schneide 9, die Späne vom Ventilsitz 11 abträgt, erreicht werden, insbesondere dann, wenn ein Kühlmittelauslass 63 in der Spannpratze 15 vorgesehen ist, der langgestreckt und so ausgebildet ist, dass die aktive Schneide 9 im Bereich des bearbeiteten Ventilsitzes 11 mit Kühlmittel beaufschlagt wird. Es ist also möglich, den Kühlmittelstrahl auf die Breite der Schneide anzupassen und eine gleichmäßige Kühlung dadurch zu gewährleisten, dass der Kühlmittelauslass 63 parallel zur aktiven Schneide 9 verläuft.

Aus den Erläuterungen zu dem Werkzeug wird deutlich, dass bei einem Verfahren zur Bearbeitung von Ventilsitzen in Zylinderköpfen von Verbrennungsmaschinen mit einem Werkzeug, welches mindestens eine geometrisch definierte Schneide aufweisende Messerplatte umfasst, eine Vereinfachung des Verfahrens dadurch eintritt, dass bei einem Verschleiß der aktiven Schneide eine Einstellung des Werkzeuges entfallen kann. Es hat sich herausgestellt, dass die Messerplatte so exakt durch die Abstützbereiche ausgerichtet wird, dass bei einem Austausch der Messerplatte die gewünschten Maße des Ventilsitzes gegeben sind und dass diese auch dadurch realisierbar sind, dass eine mit mehreren Schneidkanten versehene Messerplatte verwendet wird, die bei einem Verschleiß einer Schneide gewendet, also verdreht wird, so dass eine neue Schneide mit dem zu bearbeitenden Ventilsitz in Eingriff tritt.

## Patentansprüche

1. Werkzeug zur spanenden Bearbeitung von Ventilsitzen in Zylinderköpfen von Verbrennungsmaschinen mit einer mindestens eine geometrisch definierte Schneidkante (9) aufweisenden Messerplatte (7), die an zwei unter einem Winkel α angeordneten, durch den Grundkörper (17) des Werkzeugs (1) gebildeten Abstützbereichen (27,29) anliegt, deren Winkelhalbierende (33) im Wesentlichen senkrecht zu der aktiven Schneidkante (9) verläuft, die Späne vom Ventilsitz (11) abträgt, **dadurch gekennzeichnet, dass** die Abstützbereiche (27,29) so angeordnet sind, dass eine Prismenführung der Messerplatte (7) verwirklicht wird, wobei die Schnittkräfte (FS) parallel zu der Winkelhalbierenden (33) in die Messerplatte (7) eingeleitet werden.

2. Werkzeug nach Anspruch 1, **dadurch gekennzeichnet, dass** die Abstützbereiche (27,29) durch Abstützflächen gebildet werden.

3. Werkzeug nach einem der vorhergehenden Ansprüche, **dadurch gekennzeichnet, dass** zumindest im Bereich der Abstützbereiche (27,29) Freistellungen (55) vorgesehen sind.

4. Werkzeug nach einem der vorhergehenden Ansprüche, **dadurch gekennzeichnet, dass** eine Kühl-/Schmiermittelzufuhr vorgesehen ist.

5. Werkzeug nach einem der vorhergehenden Ansprüche, **dadurch gekennzeichnet, dass** die Kühl-/Schmiermittelzufuhr durch eine die Messerplatte (7) haltende Spannpratze (15) erfolgt.

6. Werkzeug nach einem der vorhergehenden Ansprüche, **dadurch gekennzeichnet, dass** die Kühl-/Schmiermittelzufuhr durch einen langgestreckten, vorzugsweise im Wesentlichen parallel zur aktiven Schneide (9) verlaufenden Kühlmittelauslass (63) erfolgt.

7. Werkzeug nach einem der vorhergehenden Ansprüche, **dadurch gekennzeichnet, dass** die Messerplatte (7) als Wendeplatte ausgebildet ist.

8. Werkzeug nach einem der vorhergehenden Ansprüche, **dadurch gekennzeichnet, dass** die Messerplatte (7) sechseckig ausgebildet ist.

9. Werkzeug nach einem der vorhergehenden Ansprüche, **dadurch gekennzeichnet, dass** die Messerplatte (7) mit CBN bestückt ist.

10. Werkzeug nach einem der vorhergehenden Ansprüche, **dadurch gekennzeichnet, dass** die Messerplatte (7) aus einer Schicht (S) mit CBN versehen ist.

11. Werkzeug nach einem der vorhergehenden Ansprüche, **dadurch gekennzeichnet, dass** die Messerplatte (7) eine Freifläche aufweist, die Bereiche mit unterschiedlichem Neigungswinkel umfasst.

12. Verfahren zur spanenden Bearbeitung von Ventilsitzen in Zylinderköpfen von Verbrennungsmotoren mittels eines Werkzeugs nach einem der Ansprüche 1 bis 11, **dadurch gekennzeichnet, dass** das Werkzeug (1) bei der Bearbeitung des Ventilsitzes in Richtung einer Mittelachse des ringförmigen Ventilsitzes verlagert wird, und dass als aktive Schneidkante (9) ein zwischen zwei Ecken (35) angeordneter Bereich einer Messerplatte (7) Späne vom Ventilsitz (11) abträgt, wobei die zwei unter einem Winkel α angeordneten, durch den Grundkörper (17) des Werkzeugs (1) gebildeten Abstützbereiche (27, 29) so angeordnet sind, dass eine Prismenführung der Messerplatte (7) verwirklicht wird, und wobei die Schnittkräfte (FS) im Wesentlichen parallel zu der Winkelhalbierenden (33) in die Messerplatte (7) eingeleitet werden, sodass aufgrund der durch die Abstützbereiche (27,29) verwirklichten Ausrichtung der Messerplatte (7) des Werkzeugs (1) eine Nach- und/oder Einstellung derselben bei einem Verschleiß einer Schneidkante (9) entbehrlich ist.

13. Verfahren nach Anspruch 12, **dadurch gekennzeichnet, dass** eine als Wendeplatte ausgebildete Messerplatte (7) verwendet wird.

## Claims

1. Tool for machining valve seats in cylinder heads of internal combustion engines having a knife plate (7) comprising at least one geometrically defined cutting edge (9) and resting against two support areas (27, 29), which are arranged at an angle α and which are formed by the base body (17) of the tool (1), the angle bisector (33) of which runs substantially perpendicular to the active cutting edge (9), which removes chips from the valve seat (11), **characterized in that** the support areas (27, 29) are arranged such that a prismatic guide of the knife plate (7) is realized, wherein the cutting forces (FS) are introduced into the knife plate (7) parallel to the angle bisector (33).

2. Tool according to claim 1, **characterized in that** the support areas (27, 29) are formed by support surfaces.

3. Tool according to any one of the preceding claims, **characterized in that** provision is made at least in the area of the support areas (27, 29) for exemptions (55).

4. Tool according to any one of the preceding claims, **characterized in that** provision is made for a coolant/lubricant supply.

5. Tool according to any one of the preceding claims, **characterized in that** the coolant/lubricant supply is carried out by means of a clamping jaw (15), which holds the knife plate (7).

6. Tool according to any one of the preceding claims, **characterized in that** the coolant/lubricant supply is carried out by means of an elongate coolant outlet (63), which preferably extends substantially parallel to the active cutting edge (9).

7. Tool according to any one of the preceding claims, **characterized in that** the knife plate (7) is embodied as a cutting insert.

8. Tool according to any one of the preceding claims, **characterized in that** the knife plate (7) is embodied in a hexagonal manner.

9. Tool according to any one of the preceding claims, **characterized in that** the knife plate (7) is equipped with CBN.

10. Tool according to any one of the preceding claims, **characterized in that** the knife plate (7) is provided with a layer (S) comprising CBN.

11. Tool according to any one of the preceding claims, **characterized in that** the knife plate (7) has a free space, which comprises areas comprising different angles of inclination.

12. Method for machining valve seats in cylinder heads of internal combustion engines by means of a tool according to any one of claims 1 to 11, **characterized in that** the tool (1) is displaced in the direction of a center axis of the ring-shaped valve seat upon machining the valve seat, and that an area of a knife plate (7), which is arranged between two corners (35) as active cutting edge (9), removes chips from the valve seat (11), wherein the two support areas (27, 29), which are arranged at an angle α and which are formed by the base body (17) of the tool (1), are arranged such that a prismatic guide of the knife plate (7) is realized, and wherein the cutting forces (FS) are introduced into the knife plate (7) substantially parallel to the angle bisector (33), so that a readjustment and/or adjustment thereof is not necessary in response to wear of a cutting edge (9) due to the orientation of the knife plate (7) of the tool (1), which is realized by means of the support areas (27, 29).

13. Method according to claim 12, **characterized in that** a knife plate (7), which is embodied as cutting insert, is used.

## Revendications

1. Outil pour l'usinage par enlèvement de sièges de soupape dans des têtes de cylindre de moteurs à combustion comprenant un bloc d'appui (7) présentant au moins une arête de coupe (9) définie géométriquement qui repose contre deux régions d'appui (27, 29) disposées à un angle α, formées par le corps de base (17) de l'outil (1), dont la bissectrice (33) s'étend essentiellement perpendiculairement à l'arête de coupe active (9) qui enlève des copeaux du siège de soupape (11), **caractérisé en ce que** les régions d'appui (27, 29) sont disposées de sorte qu'un guidage prismatique du bloc d'appui (7) est réalisé, dans lequel les forces de coupe (FS) sont introduites parallèlement à la bissectrice (33) dans le bloc d'appui (7).

2. Outil selon la revendication 1, **caractérisé en ce que** les régions d'appui (27, 29) sont formées par des surfaces d'appui.

3. Outil selon l'une quelconque des revendications précédentes, **caractérisé en ce que** des espaces libres (55) sont prévus au moins dans la région des régions d'appui (27, 29).

4. Outil selon l'une quelconque des revendications précédentes, **caractérisé en ce qu'**une amenée en réfrigérant/lubrifiant est prévue.

5. Outil selon l'une quelconque des revendications précédentes, **caractérisé en ce que** l'amenée en réfrigérant/lubrifiant s'effectue par une griffe de serrage (15) maintenant le bloc d'appui (7).

6. Outil selon l'une quelconque des revendications précédentes, **caractérisé en ce que** l'amenée en réfrigérant/lubrifiant s'effectue par une sortie de réfrigérant allongée (63) s'étendant de préférence essentiellement parallèlement à la lame active (9).

7. Outil selon l'une quelconque des revendications précédentes, **caractérisé en ce que** le bloc d'appui (7) est réalisé en tant que plaque réversible.

8. Outil selon l'une quelconque des revendications précédentes, **caractérisé en ce que** le bloc d'appui (7) est réalisé de manière hexagonale.

9. Outil selon l'une quelconque des revendications précédentes, **caractérisé en ce que** le bloc d'appui (7) est équipé de nitrure de bore cubique.

10. Outil selon l'une quelconque des revendications précédentes, **caractérisé en ce que** le bloc d'appui (7) est pourvu d'une couche (S) de nitrure de bore cubique.

11. Outil selon l'une quelconque des revendications précédentes, **caractérisé en ce que** le bloc d'appui (7) présente une surface libre qui comprend des régions d'angle d'inclinaison différent.

12. Procédé pour l'usinage par enlèvement de sièges de soupape dans des têtes de cylindre de moteurs à combustion au moyen d'un outil selon l'une quelconque des revendications 1 à 11, **caractérisé en ce que** l'outil (1) est déplacé lors de l'usinage du siège de soupape en direction d'un axe médian du siège de soupape annulaire, et qu'une région disposée entre deux coins (35) d'un bloc d'appui (7) enlève des copeaux du siège de soupape (11) en tant qu'arête de coupe active (9), dans lequel les deux régions d'appui (27, 29) disposées à un angle α, formées par le corps de base (17) de l'outil (1) sont disposées de sorte qu'un guidage prismatique du bloc d'appui (7) est réalisé, et dans lequel les forces de coupe (FS) sont introduites essentiellement parallèlement à la bissectrice (33) dans le bloc d'appui (7), de sorte qu'en raison de l'orientation du bloc d'appui (7) de l'outil (1), réalisée par les régions d'appui (27, 29), un rajustage et/ou réglage de celui-ci est accessoire lors d'une usure d'une arête de coupe (9).

13. Procédé selon la revendication 12, **caractérisé en ce qu'**un bloc d'appui (7) réalisé en tant que plaque réversible est utilisé.
